# EUROPÄISCHE PATENTSCHRIFT

(11) **EP 2 285 560 B1**
(45) Veröffentlichungstag und Bekanntmachung des Hinweises auf die Patenterteilung: **28.03.2012**
(21) Anmeldenummer: 09753788.0
(22) Anmeldetag: 11.05.2009
(51) Int. Cl.: B32B 3/12, F01N 3/28

(54) **METALLISCHER WABENKÖRPER MIT DEFINIERTEN VERBINDUNGSSTELLEN**
METALLIC HONEYCOMB BODY WITH DEFINED CONNECTING POINTS
CORPS ALVÉOLAIRE MÉTALLIQUE COMPORTANT DES POINTS DE JONCTION DÉFINIS

(30) Priorität: 28.05.2008 DE 102008025593
(43) Veröffentlichungstag der Anmeldung: 23.02.2011
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE); HIRTH, Peter, 51503 Rösrath (DE)
(74) Vertreter: Rössler, Matthias
(86) Internationale Anmeldenummer: PCT/EP2009/055680
(87) Internationale Veröffentlichungsnummer: WO 2009/144133

(56) Entgegenhaltungen:
- DE-A1- 3 312 944

## Beschreibung

Die vorliegende Erfindung betrifft einen Wabenkörper aufweisend zumindest ein Gehäuse und eine Wabenstruktur mit einer Vielzahl von Kanälen, wobei die Wabenstruktur mit zumindest einer wenigstens teilweise strukturierten metallischen Lage gebildet ist, die die Wabenstruktur fixierende Verbindungsstellen bildet. Dabei weist ein Querschnitt der Wabenstruktur radiale Zonen mit Verbindungsstellen auf, wobei in wenigstens einer radialen Zone zudem mindestens 1 % und höchstens 20 % der inneren Kontaktpunkte der zumindest einen wenigstens teilweise strukturierten metallischen Lage Verbindungsstellen bilden. Ein solcher Wabenkörper wird insbesondere als Abgasbehandlungseinheit in Abgassystemen mobiler Verbrennungskraftmaschinen eingesetzt.

Wabenkörper dieser Art bestehen zumeist aus einem einteiligen oder mehrteiligen Gehäuse, welches mit einer relativ großen Materialdicke bereitgestellt wird, so dass es die äußere Form bzw. Gestalt und/oder sogar einen Teil der Abgasleitung selbst darstellen kann. Im Gegensatz dazu ist man bestrebt, die Metallfolien zum Aufbau der Wabenstruktur relativ dünnwandig auszufiihren, um auf gleichem Bauraum eine möglichst große Oberfläche zu realisieren. Die Oberfläche wird beispielsweise dazu benutzt, Katalysatoren zu applizieren, die mit dem Abgas, welches die Wabenstruktur durchströmt, in Kontakt kommen. So wird eine intensive Kontaktierung der Abgasbestandteile mit dem Katalysator und damit eine effektive Reinigung des Abgases gewährleistet.

Problematisch hierbei ist, dass sich die dünnen Metallfolien gegenüber dem relativ dickwandigen Gehäuse bei thermischer und/oder dynamischer Wechselbeanspruchung, wie sie in einem mobilen Abgassystem üblich ist, unterschiedlich verhalten. Deshalb stellt die Verbindung zwischen dem Gehäuse und den Metallfolien eine besondere technische Herausforderung dar.

Es ist bekannt, auf der inneren Mantelfläche des Gehäuses eines solchen Wabenkörpers vor der Integration der Metallfolie bzw. der Wabenstruktur, Streifen aus Lotmaterial beispielsweise sogenannte Lotfolie, zu applizieren und dann die Wabenstruktur einzuschieben. Ebenso ist bekannt, eine solche Lotfolie um die Wabenstruktur zu wickeln und diesen Verbund dann in das Gehäuse einzuführen, so dass die gesamte Lotfolie auf der inneren Mantelfläche des Gehäuses anliegt. Das gleiche Verfahren wurde bereits schon vorgeschlagen, wobei die Lötbereiche nicht als Band über den gesamten Umfang, sondern mittels relativ großer, gegeneinander versetzter Flecken bereitgestellt werden. Eine ähnliche großflächige, fleckenartige Bereitstellung von Lotmaterial auf einer Stirnseite oder in Teilvolumina der Wabenstruktur sind auch bereits vorgeschlagen worden.

Ziel dieses "selektive" Lötens ist insbesondere, Zonen in der Wabenstruktur bzw. im Verbindungsbereich zwischen Wabenstruktur und Gehäuse zu schaffen, die nicht starr miteinander verbunden sind und somit Differenzdehnungen und ähnliches kompensieren können, in dem sich die einzelnen Komponenten gegenseitig verschieben. Auch wenn mit dieser Strategie bereits für einige Anwendungen eine ausreichende Dauerhaltbarkeit der Wabenkörper realisiert werden kann, treten hier gerade bei hoch belasteten Teilen gelegentlich Beschädigungen auf.

Hiervon ausgehend ist es Aufgabe der vorliegenden Erfindung, die mit Bezug auf den Stand der Technik geschilderten Probleme zumindest teilweise zu lösen. Dabei soll insbesondere ein Wabenkörper angegeben werden, der auch bei einer hoch belasteten Anwendung ein definiertes und stabiles Verhalten hinsichtlich thermischer und/oder dynamischer Wechselbeanspruchung aufweist und somit eine lange Lebensdauer ermöglicht.

Diese Aufgaben werden gelöst mit einem Wabenkörper gemäß den Merkmalen des Patentanspruchs 1. Vorteilhafte Ausgestaltungen und Anwendungen des Wabenkörpers werden in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Erfindung wird nachfolgend, insbesondere mit Bezug auf die Figuren, näher erläutert, wobei zusätzliche Ausführungsvarianten der Erfindung angegeben sind.

Der erfindungsgemäße Wabenkörper weist zumindest ein Gehäuse und eine Wabenstruktur mit einer Vielzahl von Kanälen auf, wobei die Wabenstruktur mit zumindest einer wenigstens teilweise strukturierten metallischen Lage gebildet ist, die die Wabenstruktur fixierende Verbindungsstellen bildet. Ein Querschnitt der Wabenstruktur weist zudem radiale Zonen mit Verbindungsstellen auf, wobei in wenigstens einer Zone zudem mindestens 1 % und höchstens 20 % innerer Kontaktpunkte der zumindest einen wenigstens teilweise strukturierten metallischen Lage in dem Querschnitt eine Verbindungsstelle bilden. Außerdem sind in wenigstens zwei radialen Zonen Kanäle mit einem verschiedenen Kanalquerschnitt gebildet.

Das Gehäuse ist dabei bevorzugt einteilig und kann eine zylindrische oder eine davon abweichende Querschnittsform aufweisen. Im Hinblick auf die Anzahl der Kanäle ist bevorzugt, dass der Wabenkörper mit einer Kanaldichte pro Quadratinch (cpsi) im Bereich von 100 bis 1000, insbesondere von 200 bis 600, ausgeführt ist. Bevorzugt ist weiter, dass mehrere glatte und mehrere strukturierte (z. B. gewellte) metallische Lagen (z. B. nach Art von Blechfolien) zur Herstellung des Wabenkörpers eingesetzt werden. Auch wenn solche metallischen Lagen beispielsweise spiralförmig aufgewickelt werden können, so ist hier jedoch bevorzugt, dass die metallische Lage einen davon abweichenden Verlauf aufweist, beispielsweise S-förmig, V-förmig, W-förmig, U-förmig oder dergleichen. Die Anordnung solcher metallischer Lagen zueinander erfolgt dann so, dass diese letztlich gleichmäßig den (runden, ovalen oder ähnlichen) Querschnitt des Wabenkörpers ausfüllen. Die metallischen Lagen sind nun an diversen Positionen miteinander (kraft- und/oder stoffschlüssig) verbunden, sogenannte Verbindungsstellen. Dabei handelt es sich bevorzugt um eine Lötverbindung, insbesondere um eine Hochtemperatur-Vakuum-Lötverbindung. Mit diesen Verbindungsstellen wird also die Relativlage der metallischen Lagen zueinander punktuell so definiert, dass die Wabenstruktur zueinander und im Gehäuse im Wesentlichen fixiert ist. Der Wabenkörper lässt sich nun in mehrere radiale Zonen unterteilen, wobei wenigstens in einer radialen Zone nur in sehr begrenztem Umfang Verbindungsstellen ausgebildet sind. So ist in dieser radialen Zone (z. B. nach Art eines zentrischen Kreises oder eines Kreisrings) eine Vielzahl innerer Kontaktpunkte der mindestens einen metallischen Lage gebildet. Zumeist werden diese Kontaktpunkte dadurch gebildet, dass ein Abschnitt einer strukturierten metallischen Lage an einem anderen Abschnitt einer benachbarten metallischen Lage (glatten und/oder strukturierten) anliegt. Diese Kontaktpunkte sind so regelmäßig in Richtung einer Struktur verlaufende Kontaktlinien der benachbarten Abschnitte von metallischen Lagen. In dieser wenigstens einen Zone werden nun also höchstens 20 % dieser Kontaktpunkte zur Ausbildung der die Wabenstruktur fixierenden, verteilt angeordneten Verbindungsstellen genutzt, bei den übrigen Kontaktpunkten ist (zumindest in dem betrachteten Querschnitt) keine Verbindungsstelle ausgebildet. Bevorzugt liegt der Anteil der Verbindungsstellen unter 10 % oder sogar unter 5 % der Kontaktpunkte.

Darüber hinaus wird hier auch vorgeschlagen, dass in wenigstens zwei radialen Zonen Kanäle mit einem verschiedenen Kanalquerschnitt gebildet sind. Ganz besonders bevorzugt ist dabei, dass insbesondere die Zone einen anderen Kanalquerschnitt aufweist, die nahe dem Gehäuse angeordnet ist. Mit der veränderten Form des Kanalsquerschnitts wird insbesondere erreicht, dass die Ausgestaltungen der inneren Kontaktpunkte bzw. der Kontaktpunkte der metallischen Lage mit dem Gehäuse abgewandelt wird. Dies erfolgt insbesondere unter der Zielrichtung, hier solche Kontaktpunkte zu schaffen, die für eine dauerhaltbare und definierte, selektive Ausprägung der Verbindungsstellen förderlich ist. Insoweit löst sich die Erfindung von der Vorstellung, dass die Verbindungsstellen nur an den "üblichen" Kontaktpunkten gebildet werden können, denn sie schlägt nunmehr auch vor, die Wabenstruktur mit einem Designkriterium zu gestalten, das nicht von der Interaktion Wabenstruktur-Abgas-Kontakt und/oder Druckverlust primär beeinflusst ist.

Nur der Vollständigkeit halber sei darauf hingewiesen, dass hier keine zufälligen "Deformierungen" der metallischen Lage gemeint sind, sondern dass von einem Kanalquerschnitt ausgegangen wird, der repräsentativ für die gesamte radiale Zone ist. Insbesondere sind die Grenzen hin zu den benachbarten radialen Zonen signifikant, scharf abgetrennt und/oder eindeutig identifizierbar.

Dem gemäß wird als vorteilhaft angesehen, dass in einer radialen Zone eine erhöhte Dichte von inneren Kontaktpunkten pro Einheitsquerschnittsfläche der Wabenstruktur gegenüber zumindest einer anderen radialen Zone vorliegt. Eine solche "Einheitsquerschnittsfläche" betrifft ein imaginäres Gebiet der Wabenstruktur, das ausreichend groß ist, um eine repräsentative Kanalquerschnittsform für die jeweilige radiale Zone zu erfassen. Dabei umfasst die Einheitsquerschnittsfläche der Wabenstruktur beispielsweise zumindest 20 Kanäle, zumindest 50 Kanäle oder sogar mindestens 100 Kanäle. Wird nun die gleiche Einheitsquerschnittsfläche in einer anderen radialen Zone betrachtet, so können hier mehr oder weniger innere Kontaktpunkte zwischen den benachbarten Abschnitten der zumindest einen wenigstens teilweise strukturierten metallischen Lage identifiziert werden. Die Dichte bzw. Anzahl der inneren Kontaktpunkte pro Einheitsquerschnittsfläche bringt also zum Ausdruck, dass mehr oder weniger Optionen für die Ausbildung einer fixierenden Verbindungsstelle vorliegen. Auf diese Weise können hier besondere verteilte punktförmige Löt-Muster zur definierten Ausbildung der Verbindungsstellen vorgegeben werden. Die Dichte der Kontaktpunkte pro Einheitsquerschnittsfläche lässt sich insbesondere durch die Ausprägung der Struktur der metallischen Lage beeinflussen, also beispielsweise deren Höhe und/oder Weite. Auch können zusätzliche Bauteile eingebracht sein und/oder Kontaktpunkte verbreitert werden. Bei gleicher Vorgabe der Ausbildung von Verbindungsstellen werden so dennoch verschiedene Dichten/Anzahlen von Verbindungsstellen pro Einheitsquerschnittsfläche gebildet oder umgekehrt.

Darüber hinaus wird auch als vorteilhaft angesehen, dass in einer radialen Zone eine entlang der zumindest einen metallischen Lage betrachtete Dichte der Verbindungsstellen gegenüber zumindest einer anderen radialen Zone erhöht ist. Wie bereits vorstehend ausgeführt, hat die zumindest eine wenigstens teilweise strukturierte metallische Lage nach der Ausbildung einer Wabenstruktur einen vorgegebenen Verlauf, betrachtet über den Querschnitt der Wabenstruktur. Ist die Wabenstruktur beispielsweise aus Kombinationen mit glatten und gewellten Blechfolien ausgeführt, und ist die Struktur regelmäßig, so sind entlang der Verlaufsrichtung der Lage in regelmäßigen Abständen innere Kontaktpunkte zwischen diesen beiden Blechfolien gebildet. Dabei erstreckt sich eine solche Lage regelmäßig über mehrere radiale Zonen hinweg. Gerade unter Berücksichtigung dieser Tatsache wird hier vorgeschlagen, dass die Dichte bzw. Anzahl der Verbindungsstellen, die mit den bereitgestellten Kontaktpunkten generell möglich ist, erhöht ist.

Gemäß einer Weiterbildung wird auch vorgeschlagen, dass in einer radialen Zone ein gegenüber zumindest einer anderen radialen Zone verschiedener Verlauf der zumindest einen metallischen Lage vorgesehen ist. Das bedeutet beispielsweise, dass beim Übergang von einer radialen Zone hin zu einer anderen radialen Zone ein signifikanter, klar erkennbarer Wechsel der Verlaufsrichtung stattfindet. Dabei gilt dies insbesondere für alle diese Zonengrenze übertretenden Lagen. Außerdem kann dieser Verlaufsübergang auch nicht-stetig sein und/oder einen signifikant anderen Krümmungsradius zur Folge haben (gegebenenfalls mit anderer Orientierung). Auch in Folge der Änderung der Verlaufsrichtung der zumindest einen wenigstens teilweise strukturierten metallischen Lage wird die Position der inneren Kontaktpunkte mit Bezug auf den gesamten Querschnitt der Wabenstruktur beeinflusst, so dass sich auch auf diese Weise, gerade in Kombination mit anderen Maßnahmen zur Bereitstellung verschiedener Kanalquerschnitte, eine definierte Anordnung der inneren Kontaktpunkte einstellen lässt, mit der eine präzise und dauerhaltbare Lötung der Wabenstruktur ermöglicht wird.

Des Weiteren wird als vorteilhaft angesehen, dass in einer radialen Zone der Kanalquerschnitt mit in die Kanäle hineinragende Vorsprünge beeinflusst ist. Diese Vorsprünge sind beispielsweise Ausstanzen, Umbiegungen oder dergleichen, mit denen ein Teil der metallischen Lage so umgeformt wird, dass diese Vorsprünge (aus der normalen Struktur heraus) bilden. Diese Vorsprünge können sich nun beispielsweise über zumindest einen Teil des Kanalquerschnitts hinaus erstrecken und somit ebenfalls innere Kontaktpunkte mit der benachbarten metallischen Lage bilden, so dass zwischen den inneren Kontaktpunkten, die mit der "normalen" Struktur zusätzliche Kontaktpunkte gebildet werden können. Auch auf diese Weise kann die Dichte bzw. Anzahl der inneren Kontaktpunkte pro Einheitsquerschnittsfläche bzw. entlang der Verlaufsrichtung der Lagen beeinflusst werden.

Entsprechend einer Fortbildung des Wabenkörpers ist in einer radialen Zone der Kanalquerschnitt aufgrund einer veränderten Weite oder Höhe einer Struktur der wenigstens teilweise strukturierten metallischen Lage beeinflusst. Ganz besonders bevorzugt ist hierbei, dass nur die Weite oder nur die Höhe einer Struktur in den betrachteten radialen Zonen verschieden ist. Als "Weite" wird dabei der Abstand gleichartiger Strukturextrema in Verlaufsrichtung der metallischen Lage angesehen, während die "Höhe" den Abstand entgegengesetzter Strukturextrema quer zur Verlaufsrichtung der metallischen Lage angibt.

Darüber hinaus wird vorgeschlagen, dass in einer radialen Zone die Verbindungsstellen mit einer Erstreckung in eine Umfangsrichtung der Wabenstruktur ausgebildet sind. Regelmäßig liegen die Verbindungsstellen so vor, dass diese eine im Wesentlichen linien- bzw. streifenförmige Ausdehnung haben. Üblicher Weise folgen diese Verbindungsstellen dem Verlauf der Struktur bzw. der Kanäle, die sich zwischen den Stirnseiten der Wabenstruktur erstrecken. Hier wird nun aber für eine radiale Zone vorgeschlagen, Verbindungsstellen im Wesentlichen senkrecht dazu auszubilden, die also parallel zu den Stirnseiten bzw. dem Querschnitt der Wabenstruktur verlaufen. Unter Umständen können diese Verbindungsstellen z. B. auch dazu genutzt werden, Kanäle zu verschließen, wobei auch hier bevorzugt ist, dass diese Kanäle bereits eine Form des Kanalquerschnitts aufweisen, die für das Abgas strömungstechnisch ungünstig ist. Damit kann auch der Druckverlust eines einen solchen Wabenkörper durchströmenden Abgasstromes gering gehalten werden. Auch unter diesem Gesichtspunkt ist es ratsam, eine solche Bereitstellung von Verbindungsstellen mit einer Erstreckung in eine Umfangsrichtung der Wabenstruktur nur im Randbereich, also nahe dem Gehäuse, vorzusehen. Die "Erstreckung" stellt dabei das Ausmaß der einzelnen Verbindungsstelle dar, welches am größten ist, also beispielweise längs bei einer streifen- bzw. linienförmigen Ausprägung der Verbindungsstelle.

Zudem kann die Wabenstruktur in wenigstens einer radialen Zone mit einer Beschichtung ausgeführt sein. Die Beschichtung kann beispielweise dazu vorgesehen sein, die Ausbildung von Diffusions-Anbindungen zwischen den kontaktierten metallischen Lagen, zwischen denen keine Verbindungsstellen ausgebildet werden sollen, verhindert. Eine entsprechende Beschichtung kann beispielsweise Aluminiumoxid umfassen. Gleichzeitig ist es auch möglich, alternativ und/oder kumulativ eine Beschichtung zur Abgasbehandlung vorzusehen, beispielweise zur Konvertierung von im Abgas enthaltenen Bestandteilen und/oder zur Speicherung bestimmter Komponenten des Abgasstromes.

Ganz besonders bevorzugt ist ein Aufbau des Wabenkörpers, bei dem die Wabenstruktur mit einer Vielzahl von wenigstens teilweise strukturierten metallischen Lagen gebildet ist, die alle mit beiden Enden am Gehäuse anliegen und dort axial begrenzt angebunden sind. Das bedeutet mit anderen Worten insbesondere, dass jede metallische Lage den Querschnitt der Wabenstruktur unterteilt bzw. diesen Querschnitt überspannt. Um eine sichere, aber gleichzeitig auch belastbare Anbindung zwischen Wabenstruktur und Gehäuse zu realisieren, dienen beide Enden zur Fixierung der Wabenstruktur am Gehäuse, wobei diese nicht über die gesamte axiale Ausdehnung mit dem Gehäuse verbunden ist, sondern nur in einem axial begrenzten Abschnitt. Dieser axial begrenzte Abschnitt beträgt beispielweise weniger als 40 %, insbesondere weniger als 20 % der axialen Länge der Wabenstruktur. Ganz besonders bevorzugt ist eine solche Wabenstruktur mit einem S-förmigen, V-förmigen und/oder O-förmigen Verlauf vorgesehen.

Ein solcher Wabenkörper findet insbesondere Einsatz in einem Kraftfahrzeug aufweisend eine Verbrennungskraftmaschine und ein Abgasnachbehandlungssystem, wobei das Abgasnachbehandlungssystem zumindest einen erfindungsgemäßen Wabenkörper aufweist.

Die Erfindung sowie das technische Umfeld werden nachfolgend anhand der Figuren näher erläutert. In den Figuren sind regelmäßig die gleichen Elemente mit gleichen Bezugszeichen versehen. Es ist darauf hinzuweisen, dass die Figuren besonders bevorzugte Ausführungsvarianten der Erfindung zeigen, diese jedoch nicht darauf beschränkt ist. Es zeigen:
- Figur 1:: einen Querschnitt einer Ausführungsvariante des Wabenkörpers,
- Figur 2:: ein Detail einer weiteren Ausführungsvariante des Wabenkörpers,
- Figur 3:: noch eine weitere Detailansicht einer anderen Ausführungsvariante des Wabenkörpers,
- Figur 4:: noch eine weitere Ausgestaltung des Wabenkörpers im Detail,
- Figur 5:: eine weitere Ausführungsvariante des Wabenkörpers im Detail,
- Figur 6:: eine metallische Lage zum Aufbau einer Wabenstruktur gemäß einer weiteren Art,
- Figur 7:: eine weitere Ansicht einer zusätzlichen Ausführungsvariante des Wabenkörpers im Querschnitt,
- Figur 8:: eine Ausprägung eines Wabenkörpers im Längsschnitt,
- Figur 9:: ein Kraftfahrzeug mit einem Abgassystem,
- Figur 10:: ein erstes Detail eines Stapels für einen Wabenkörper und
- Figur 11:: ein weiteres Detail einer anderen Ausführungsvariante eines Stapels für einen Wabenkörper.

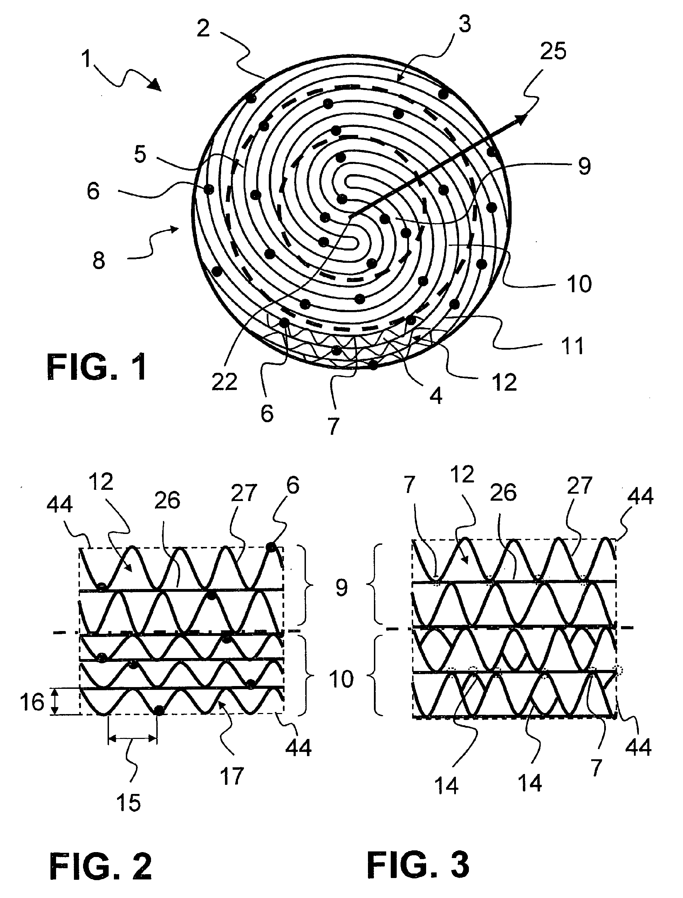

Figur 1 zeigt in einer stirnseitigen Ansicht einen Querschnitt 8 eines Wabenkörpers 1. Der Wabenkörper 1 ist dabei mit einem runden Gehäuse 2 nach Art eines Mantelrohres gebildet, in dem die Wabenstruktur 3 positioniert ist. Die Wabenstruktur 3 ist mit einer Mehrzahl glatter und gewellter metallischer Lagen 5 gebildet, die hier S-förmig angeordnet sind. Mit diesen metallischen Lagen 5 sind viele Kanäle 4 gebildet, die sich insbesondere aus der gewellten Struktur 12 der strukturierten metallischen Lage 5 ergeben. Die Kanäle 4, ebenso wie die Struktur 12, verlaufen dabei im Wesentlichen senkrecht zum Radius 25 des Wabenkörpers 1, hier also in die Zeichenebene hinein.

Der Querschnitt 8 kann nun beispielweise ausgehend von seinem Zentrum im Bereich der Achse 22 in mehrere radiale Zonen unterteilt werden, nämlich in eine erste radiale Zone 9, eine zweite radiale Zone 10 und eine dritte radiale Zone 11. Die Zonen sind hier nach Art von konzentrischen Kreisen bzw. Kreisringen gebildet, eine hiervon abweichende Gestalt ist gleichermaßen möglich. Wie hier unten in einem Teil schematisch angedeutet, erfassen die Zonen in Richtung des Radius 25 mehrere metallische Lagen 5. Die metallischen Lagen 5 in einer radialen Zone, wie hier beispielweise für die dritte Zone 11 dargestellt, bilden eine Reihe von Kontaktpunkten 7 aus, die insbesondere linienförmig entlang der Extrema der Struktur 12 ausgebildet sind. Wie hier (rein schematisch) angedeutet ist, sind nur sehr wenige Verbindungsstellen 6 trotz Bereitstellung einer deutlich größeren Anzahl von Kontaktpunkten 7 verteilt ausgebildet. Bei der veranschaulichten Variante in Figur 1 ist in allen Zonen verwirklicht, dass mindestens 1 % und höchstens 20 % der Kontaktpunkte 7 der metallischen Lagen 5 miteinander eine Verbindungsstelle 6 bilden, dies ist aber nicht zwingend erforderlich.

Figur 2 zeigt nun ein Detail einer solchen Wabenstruktur 3 im Querschnitt, wobei hier ein Übergang von einer ersten radialen Zone 9 hin zu einer zweiten radialen Zone 10 veranschaulicht ist. Im oberen Bereich ist die erste radiale Zone 9 mit einer abwechselnden Anordnung einer Welllage 27 und einer Glattlage 26 gebildet. Die beiden Lagen kontaktieren einander in vielen Bereichen (Kontaktpunkten), wobei nur ein Teil davon zur Ausbildung von Verbindungsstellen 6 genutzt wird. Darunter ist nun die Ausprägung der Glattlagen und Welllagen veranschaulicht, bei denen ein veränderter Kanalquerschnitt 12 vorliegt. Der Kanalquerschnitt 12 wird durch die benachbarten, einander kontaktierenden Lagen begrenzt, wobei insbesondere ein Kanal durch die jeweiligen Lagen und die beiden benachbarten Kontaktpunkte charakterisiert ist. Im unteren Abschnitt von Figur 2 ist nun die Struktur 17 so ausgeführt, dass sie zwar die gleiche Weite 15 aufweist, jedoch eine reduzierte Höhe 16. Dies führt nun dazu, dass in der unteren Einheitsquerschnittsfläche 44 eine größere Anzahl von Kontaktpunkten bzw. Verbindungsstellen 6 ermöglicht bzw. realisiert ist.

Eine entsprechende Darstellung lässt sich auch in Figur 3 erkennen. Hierbei wird in der unten dargestellten Einheitsquerschnittsfläche 44 der zweiten radialen Zone 10 die Dichte bzw. Anzahl der Kontaktpunkte 7 dadurch erhöht, dass die Welllage 27 (nur hier) an vorgegebenen Stellen mit Vorsprüngen 14 ausgeführt sind, die zusätzliche Kontaktpunkte 7 bilden. Auch auf diese Weise kann die Anzahl bzw. Dichte der Kontaktpunkte 7 beeinflusst werden.

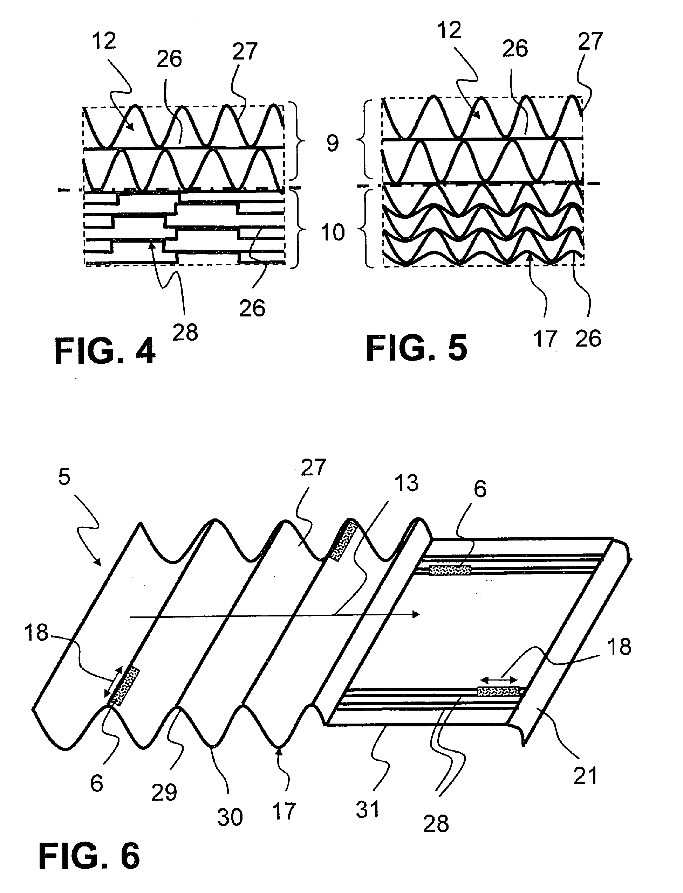

Derselben Darstellung folgend kann aus Figur 4 eine weitere Ausführungsvariante entnommen werden. Dabei wird in der unten dargestellten zweiten radialen Zone 10 eine andere Gestalt der Kanalquerschnitte 12 angegeben. Dies wird hier dadurch erreicht, dass in diesem Bereich nur noch Glattlagen 26 vorgesehen sind, die beispielweise mit Prägungen 28 ausgeführt sind, die ein signifikant anderes Verhältnis von Höhe zu Breite der Struktur bilden, wie dies in der ersten radialen Zone 9 verwirklicht ist. Insbesondere liegen in diesem Bereich die Glattlagen 26 deutlich dichter beieinander im Vergleich zu der Anordnung in der ersten radialen Zone 9.

In der Figur 5 wurde nunmehr die Struktur der Welllage 27 in der ersten radialen Zone 9 und der zweiten radialen Zone 10 beibehalten. Dazu wurde aber die Glattlage 26 im Bereich der zweiten radialen Zone 10 mit einer Struktur 17 ausgeführt, die sich der Struktur der Welllage 27 anpasst bzw. anschmiegt. Dadurch kann der Kontaktbereich zwischen beiden Lagen verbreitert werden, so dass auch auf diese Weise eine gezielte Anpassung bzw. Ausprägung der Verbindungsstellen möglich ist.

Figur 6 zeigt schematisch und perspektivisch eine teilweise strukturierte metallische Lage 5. Im linken Bereich von Figur 6 weist die metallische Lage eine wellenförmige bzw. sinusförmige Struktur 17 mit Erhebungen 29 und Senken 30 auf, die sich quer zur Richtung des Verlaufs 13 der Lage 5 erstrecken (Welllage 27). Diese Strukturextrema (Erhebung und/oder Senke) bilden Kontaktpunkte aus, die zur Realisierung von Verbindungsstellen 6 eingesetzt werden können. In zwei Teilbereichen ist eine solche Verbindungsstelle 6 angedeutet, wobei diese regelmäßig weiter in Richtung des Verlaufs 13 voneinander beabstandet sind. Gleichwohl ist die Verbindungsstelle 6 hier mit einer streifenförmigen bzw. linienförmigen Gestalt ausgeführt, so dass diese eine (maximale) Erstreckung 18 entlang der Strukturextrema aufweist. Zur Ausbildung der unterschiedlichen radialen Zonen später im Wabenkörper schließt sich an diesen Abschnitt der Lage 5 ein im Wesentlichen glatter Abschnitt 31 an. In diesem glatten Abschnitt 31 sind gleichwohl Prägungen 28 vorgesehen, die sich insbesondere senkrecht zur Struktur 17 erstrecken. Auch hinsichtlich ihrer Dimensionen sind diese Prägungen 28 deutlich kleiner, insbesondere ist die Höhe kleiner als 10 % der Höhe der Struktur 17. Die Prägungen 28 können hin zu einer und/oder beider Seiten der Lage 5 hervorstehen und insofern beispielweise linienförmige, sich in Umfangsrichtung des Wabenkörpers erstreckende Kontaktpunkte mit benachbarten Lagen 5 ausbilden. Sollen diese zur Fixierung der Lagen genutzt werden, so wird die Verbindungsstelle 6 entlang dieser Prägungen 28 ausgeführt, so dass diese eine anders orientierte (maximale) Erstreckung 18 aufweisen (im montierten Zustand im Wesentlichen in Richtung des Umfangs). Daran anschließend ist noch ein gekrümmtes Ende 21 rechts vorgesehen, dass den Abschluss der Lage 5 bildet und insbesondere zur Anlage an einem Gehäuse dient. Durch die gekrümmte Ausgestaltung kann der flächige Kontakt hin zum Gehäuse verbessert werden.

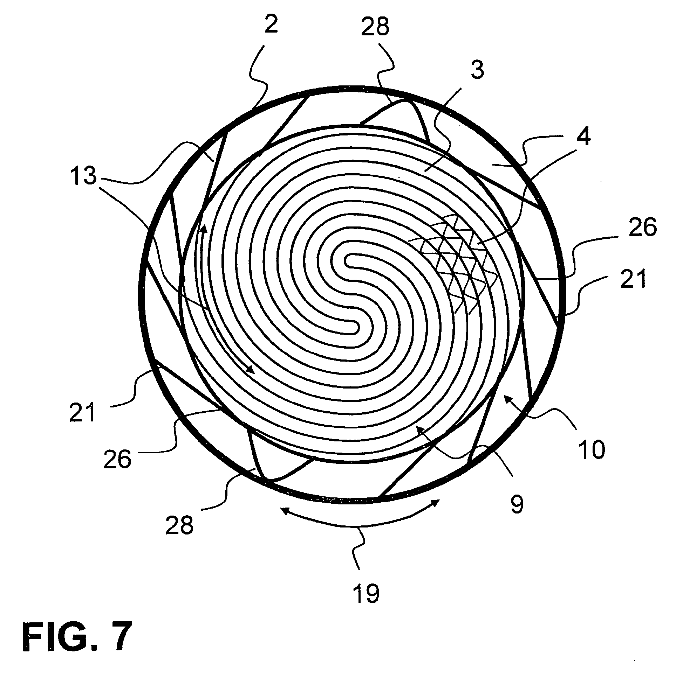

Figur 7 zeigt schematisch eine Ausführungsvariante, bei der die Wabenstruktur 3 wiederum mit Welllagen und Glattlagen gebildet ist, wobei die Welllagen verkürzt sind. Die Glattlagen 26 gehen beispielweise von einem gebogenen Verlauf in einen gradlinigen Verlauf 13 über und kontaktieren dann das Gehäuse 2. Das bedeutet mit anderen Worten, dass eine erste radiale Zone 10 Kanäle 4 mit einem relativ kleinen Kanalquerschnitt bereitstellen, die durch Glattlagen und Welllagen gebildet sind. Die äußere, zweite radiale Zone 10 ist dahingegen nur mit Glattlagen 26 gebildet. Die Glattlagen 26 können dabei insbesondere auch verstärkt ausgeführt sein. Somit ist es beispielweise möglich, die Glattlage 26 im Bereich der zweiten radialen Zone 10 so umzuformen, dass eine mehrfache Lagendicke dort erreicht wird, beispielweise durch mehrfaches Falzen der Glattlagen 26. Ebenso ist möglich, hier an die Glattlagen 26 zusätzliche Blechfolien (z. B. anderer Blechdicke) anzuschweißen, anzulöten oder sonst wie zu befestigen. Im Querschnitt kann auch gesehen werden, dass aufgrund der S-förmigen Anordnung der Lagen in der ersten radialen Zone 9 ein nicht gleichmäßiger Austritt der Glattlagen 26 hin zum Gehäuse 2 realisiert ist. Um hier gleichwohl eine in Umfangsrichtung 19 gleichmäßige Anbindung der Wabenstruktur 3 an das Gehäuse 2 zu realisieren, kann ein Teil der Glattlage 26 mit zusätzlichen Prägungen 28 ausgeführt sein, so dass in Umfangsrichtung 19 im Wesentlichen mit dem gleichen Abstand Kontaktpunkte bzw. Verbindungsstellen 6 gebildet sind.

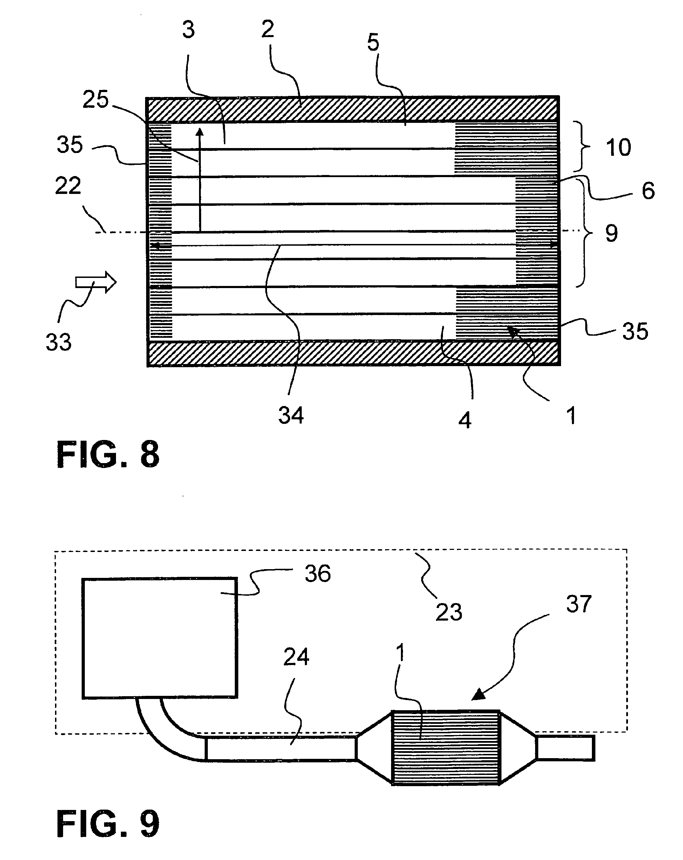

Figur 8 zeigt einen Längsschnitt durch eine Ausführungsvariante des Wabenkörpers 1. Der Wabenkörper 1 wird wiederum außen durch ein Gehäuse 2 begrenzt, in dem die Wabenstruktur 3 positioniert ist. Die Wabenstruktur 3 weist eine Vielzahl von Kanälen 4 auf, die sich zwischen den Stirnseiten 35 der Wabenstruktur 3 erstrecken. Hierbei wird durch die Stirnseiten 35 auch die Länge 34 der Wabenstruktur 3 definiert. Bei der hier veranschaulichten Ausführungsvariante ist die Erstreckungsrichtung der Kanäle 4 parallel zur zentralen Achse 22 der Wabenstruktur 3. Senkrecht zu dieser Achse 22 ist der Radius 25 gekennzeichnet.

Die Position der einzelnen Verbindungsstellen mit Bezug auf die Achse 22, die Stirnseite 35 und/oder die Länge 34 geht nun klar aus diesem Längsschnitt hervor. Im Bereich der Stirnseite 35, auf die Abgas mit der Strömungsrichtung 33 auftritt, angrenzend ein Verbindungsbereich ausgeführt, wobei die Verbindungsstellen 6 relativ kurz sind, beispielweise kleiner 10 mm oder sogar kleiner 5 mm. Auf der gegenüberliegenden Stirnseite 35 ist im Bereich einer ersten Zone 9, die konzentrisch um die Achse 22 ausgebildet ist, eine Mehrzahl von Verbindungsstellen 6 vorgesehen, die eine andere Erstreckung aufweisen als die Verbindungsstellen 6 in der zweiten Zone 10 nach Art eines Kreisrings außen. Es ist klarstellend darauf hinzuweisen, dass hier keine großflächigen Verbindungen realisiert sind. Die Schraffur für die Verbindungsstellen 6 also rein schematisch ist. Grundsätzlich sind hier nur verteilte linienförmige Verbindungsstellen 6 bezüglich einer vorgegebenen Anzahl von Kontaktstellen der benachbarten metallischen Lagen 5 ausgebildet.

Die Figur 9 zeigt schematisch ein Kraftfahrzeug 23 mit einer Verbrennungskraftmaschine 36, beispielweise einem Dieselmotor oder einem Ottomotor. Das in der Verbrennungskraftmaschine 36 erzeugt Abgas durchströmt ein Abgasnachbehandlungssystem 24 hin zu wenigstens einer Abgasbehandlungseinheit 37, wobei diese hier mit einem erfindungsgemäßen Wabenkörper 1 gestaltet ist. Als Abgasbehandlungseinheit 37 kommen insbesondere Katalysatoren, Adsorber, Filter, Partikelabscheider, Reformer, Heizer oder dergleichen in Betracht.

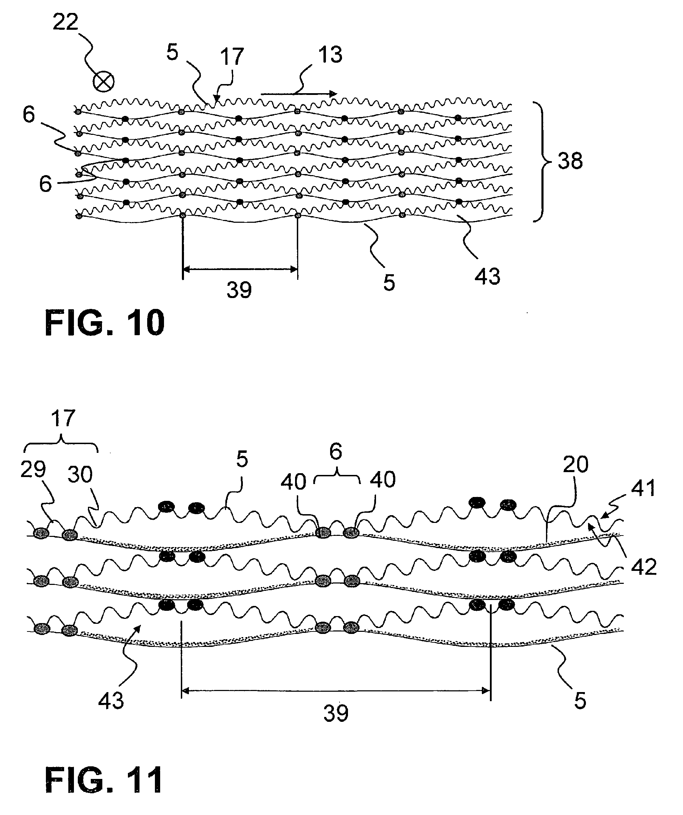

In Figur 10 ist ein Stapel 38 mit einer Mehrzahl strukturierter und glatter metallischer Lagen 5 (z. B. nach Art von Blechfolien und/oder metallischer Feinstdrahtvliese) gezeigt. Der Stapel 38 ist hierbei in einem noch ungebundenen Zustand dargestellt, hat also einen im Wesentlichen gradlinigen Verlauf 13. Mit unterschiedlichen Farbgebungen sind zudem die Verbindungsstellen 6 der metallischen Lagen zueinander dargestellt. In Folge der Tatsache, dass die Ausbildung solcher Verbindungsstellen 6 (Lötverbindungen) erst im montierten Zustand, also im gewundenen Zustand im Inneren des Gehäuses, ausgebildet werden, veranschaulicht die Figur 10 insbesondere die Position für ein Haftmittel, an dem nach dem Wickelvorgang beispielweise pulverförmiges Lot positioniert wird, welches letztendlich zur Ausbildung der hier exemplarisch und veranschaulichend dargestellten, bezogen auf die strukturierten metallischen Lagen 5 oberseitigen Verbindungsstellen (hier dunkel markiert) und unterseitige Verbindungsstellen (hier hell markiert) dient. Zur Positionierung des Haftmittels und/oder des Lots kann insbesondere ein Druckverfahren eingesetzt werden, beispielweise nach Art nach Inkjet-Verfahrens.

Unten in Figur 10 ist gezeigt, dass die gleichartigen, unterseitigen Verbindungsstellen 6, hier also hin zur unteren glatten Lage 5, einen vorgegebenen Abstand 39 bilden, der beispielweise in Richtung des Verlaufs 13 zumindest 20 mm und/oder eine Vielzahl der Strukturextrema (Erhebungen und Senken; beispielweise mindestens 20 Erhebungen) umfasst. Auch wenn hier eine regelmäßige Anordnung der Verbindungsstellen 6 gezeigt ist, so ist dies nicht zwingend erforderlich. Üblicher Weise liegt die Struktur 17 einer gewellten metallischen Lage 5 an der glatten metallischen Lage 5 jeweils an, so dass die Struktur 17 an der glatten Lage 5 in Richtung der Achse 22, also senkrecht zum Verlauf 13, Kontaktlinien bzw. Berührpunkte ausbildet. Die Darstellung in Figur 10 soll zeigen, dass bei einer Krafteinwirkung auf die metallischen Lagen 5 senkrecht zum Verlauf 13 im späteren Betrieb Dehnungsfugen 43 gebildet werden können, die damit eine deutlich flexiblere Wabenstruktur und eine bessere Anpassung an das thermische und dynamische Belastungsverhalten der Wabenstruktur ermöglicht.

Figur 11 zeigt nun eine Variante, wobei jede Verbindungsstelle 6 mit zwei Lötpunkten 40 an benachbarten Strukturextrema (Erhebungen 29 oder Senken 30) ausgebildet ist. Zwischen den Verbindungsstellen 6 ist eine Vielzahl von Strukturextrema der strukturierten metallischen Lage 5 vorgesehen. Es sei an dieser Stelle darauf hingewiesen, dass üblicher Weise die Anzahl der Strukturextrema zwischen den gleichartigen (gleichfarbig dargestellten) Verbindungsstellen 6 in Richtung des Verlaufs 13 normaler Weise deutlich höher ist als das hier exemplarisch dargestellt ist, beispielweise liegen mindestens fünfzehn (15) Strukturextrema dazwischen.

Darüber hinaus lässt sich aus Figur 11 erkennen, dass die glatten metallischen Lagen 5 mit einer Beschichtung 20 versehen sein können, die insbesondere (unerwünschte) Diffusionsanbindungen der benachbarten, im Einsatz aneinander regelmäßig anliegenden, metallischen Lagen 5 verhindert. Auch wenn diese bevorzugt an einer Oberseite 41 und einer Unterseite 42 der glatten und/oder gewellten metallischen Lage 5 vorgesehen ist, kann in Ausnahmesituationen auch eine einseitige Bereitstellung z. B. einer Oxidschicht genügen. Jedenfalls soll so gewährleistet werden, dass eine Anbindung der metallischen Lagen, beispielweise in Folge einer Diffusion, vermieden wird und sich folglich unter Beanspruchung relativ große Dehnungsfugen 43 ausbilden können. Mit anderen Worten kann also als Bildungsgesetz festgehalten werden, dass eine solche Dehnungsfuge 43 beispielweise mit einem Abschnitt einer glatten metallischen Lage 5 und einem Abschnitt einer strukturierten metallischen Lage 5 gebildet ist, wobei die Dehnungsfuge 43 durch zwei gleichartige Verbindungsstellen (hier für unterseitige Verbindungsstellen gezeigt) begrenzt ist, und weiter die Dehnungsfugenbegrenzung mittels der strukturierten metallischen Lage 5 mit mindestens fünfzehn (15) Strukturextrema gebildet ist. Damit wird eine besonders starke Verformbarkeit der Dehnungsfuge 37 bzw. eine flexible Anordnung der benachbarten Blechfolien realisiert, und zwar einerseits in Richtung des Verlaufs 13 als auch quer dazu. Die Anzahl der Lötpunkte pro Verbindungsstelle 6 ist auf maximal 3 begrenzt, insbesondere sogar nur auf 2 und besonders bevorzugt ist die Ausgestaltung einer Verbindungsstelle 6 mit nur genau einem Lötpunkt.

### Bezugszeichenliste

- 1: Wabenkörper
- 2: Gehäuse
- 3: Wabenstruktur
- 4: Kanal
- 5: metallische Lage
- 6: Verbindungsstelle
- 7: Kontaktpunkt
- 8: Querschnitt
- 9: erste radiale Zone
- 10: zweite radiale Zone
- 11: dritte radiale Zone
- 12: Kanalquerschnitt
- 13: Verlauf
- 14: Vorsprung
- 15: Weite
- 16: Höhe
- 17: Struktur
- 18: Erstreckung
- 19: Umfangsrichtung
- 20: Beschichtung
- 21: Ende
- 22: Achse
- 23: Kraftfahrzeug
- 24: Abgasnachbehandlungssystem
- 25: Radius
- 26: Glattlage
- 27: Welllage
- 28: Prägung
- 29: Erhebung
- 30: Senke
- 31: Abschnitt
- 32: Stirnseite
- 33: Strömungsrichtung
- 34: Länge
- 35: Verbindungsbereich
- 36: Verbrennungskraftmaschine
- 37: Abgasbehandlungseinheit
- 38: Stapel
- 39: Abstand
- 40: Lotpunkt
- 41: Oberseite
- 42: Unterseite
- 43: Dehnungsfuge
- 44: Einheitsquerschnittsfläche

## Patentansprüche

1. Wabenkörper (1) zumindest aufweisend ein Gehäuse (2) und eine Wabenstruktur (3) mit einer Vielzahl von Kanälen (4), wobei die Wabenstruktur (3) mit zumindest einer wenigstens teilweise strukturierten metallischen Lage (5) gebildet ist, die die Wabenstruktur (3) fixierende Verbindungsstellen (6) bildet und ein Querschnitt (8) der Wabenstruktur (3) radiale Zonen (9, 10, 11) mit Verbindungsstellen (6) aufweist, die in Richtung eines Radius (25) mehrere metallische Lagen (5) erfassen, wobei in wenigstens einer Zone (9, 10, 11) zudem mindestens 1% und höchstens 20 % innerer Kontaktpunkte (7) der zumindest einen wenigstens teilweise strukturierten metallischen Lage (5) in dem Querschnitt (8) eine Verbindungsstelle (6) bilden, und in wenigstens zwei radialen Zonen (9, 10, 11) Kanäle (4) mit einem verschiedenen Kanalquerschnitt (12) gebildet sind.

2. Wabenkörper (1) nach Patentanspruch 1, bei dem in einer radialen Zone (9, 10, 11) eine erhöhte Dichte von inneren Kontaktpunkten (7) pro Einheitsquerschnittsfläche der Wabenstruktur (3) gegenüber zumindest einer anderen radialen Zone vorliegt.

3. Wabenkörper (1) nach Patentanspruch 1 oder 2, bei dem in einer radialen Zone (9, 10, 11) eine entlang der zumindest einen wenigstens teilweise strukturierten metallischen Lage (5) betrachtete Dichte der Verbindungsstellen (6) gegenüber zumindest einer anderen radialen Zone erhöht ist.

4. Wabenkörper (1) nach einem der vorhergehenden Patentansprüche, bei dem in einer radialen Zone (9, 10, 11) ein gegenüber zumindest einer anderen radialen Zone verschiedener Verlauf (13) der zumindest einen wenigstens teilweise strukturierten metallischen Lage (5) vorgesehen ist.

5. Wabenkörper (1) nach einem der vorhergehenden Patentansprüche, bei dem in einer radialen Zone (9, 10, 11) der Kanalquerschnitt (12) mit in die Kanäle (4) hineinragende Vorsprünge (14) beeinflusst ist.

6. Wabenkörper (1) nach einem der vorhergehenden Patentansprüche, bei dem in einer radialen Zone (9, 10, 11) der Kanalquerschnitt (12) aufgrund einer veränderten Weite (15) oder Höhe (16) einer Struktur (17) der wenigstens teilweise strukturierten metallischen Lage (5) beeinflusst ist.

7. Wabenkörper (1) nach einem der vorhergehenden Patentansprüche, bei dem in einer radialen Zone (9, 10, 11) die Verbindungsstellen (6) mit einer Erstreckung (18) in eine Umfangsrichtung (19) der Wabenstruktur (3) ausgebildet sind.

8. Wabenkörper (1) nach einem der vorhergehenden Patentansprüche, bei dem die Wabenstruktur (3) in wenigstens einer radialen Zone (9, 10, 11) mit einer Beschichtung (20) ausgeführt ist.

9. Wabenkörper (1) nach einem der vorhergehenden Patentansprüche, bei dem die Wabenstruktur (3) mit einer Vielzahl von wenigstens teilweise strukturierten metallischen Lagen (5) gebildet ist, die alle mit beiden Enden (21) am Gehäuse (2) anliegen und dort axial begrenzt angebunden sind.

10. Kraftfahrzeug (23) aufweisend eine Verbrennungskraftmaschine (36) und ein Abgasnachbehandlungssystem (24), wobei das Abgasnachbehandlungssystem (24) zumindest einen Wabenkörper (1) gemäß einem der vorhergehenden Patentansprüche aufweist.

## Claims

1. Honeycomb body (1), at least comprising a housing (2) and a honeycomb structure (3) with a multiplicity of channels (4), wherein the honeycomb structure (3) has at least one at least partially structured metallic layer (5) which forms connecting points (6) fixing said honeycomb structure (3), and wherein a cross section (8) of the honeycomb structure (3) has radial zones (9, 10, 11) with connecting points (6), wherein the zones (9, 10, 11) comprise several metallic layers (5) in the direction of a radius (25), wherein in at least one zone (9, 10, 11) at least 1% and at most 20% of inner contact points (7) of the at least one at least partially structured metallic layer (5) form a connecting point (6) in the cross section (8), and wherein in at least two radial zones (9, 10, 11) channels (4) having different channel cross sections (12) are formed.

2. Honeycomb body (1) according to claim 1, wherein in one radial zone (9, 10, 11) the inner contact points (7) have a higher density per unit of cross-sectional area of the honeycomb structure (3) than in at least one other radial zone.

3. Honeycomb body (1) according to claim 1 or 2, wherein in one radial zone (9, 10, 11) the density of the connecting points (6), as viewed along the at least one at least partially structured metallic layer (5), is being higher than in at least one other radial zone.

4. Honeycomb body (1) according to any one of the preceding claims, wherein in one radial zone (9, 10, 11) the at least one at least partially structured metallic layer (5) has a different profile (13) than in at least one other of the radial zones.

5. Honeycomb body (1) according to any one of the preceding claims, wherein in one radial zone (9, 10, 11) the cross section (12) of the channels (4) is influenced by projections (14) projecting into the channels (4).

6. Honeycomb body (1) according to any one of the preceding claims, wherein in one radial zone (9, 10, 11) the cross section (12) of the channels (4) is influenced by a different width (15) or height (16) of a structure (17) of the at least one at least partially structured metallic layer (5).

7. Honeycomb body (1) according to any one of the preceding claims, wherein in one radial zone (9, 10, 11) the connecting points (6) are formed with an extent (18) in a circumferential direction (19) of the honeycomb structure (3).

8. Honeycomb body (1) according to any one of the preceding claims, wherein the honeycomb structure (3) is formed with a coating (20) in at least one radial zone (9, 10, 11).

9. Honeycomb body (1) according to any one of the preceding claims, wherein the honeycomb structure (3) is formed by a multiplicity of at least partially structured metallic layers (5) each bearing with their both ends (21) against the housing (2) and being there connected axially limited.

10. Motor vehicle (23), comprising an internal combustion engine (36) and an exhaust-gas aftertreatment system (24), wherein the exhaust-gas aftertreatment system (24) has at least one honeycomb body (1) according to any one of the preceding claims.

## Revendications

1. Corps en nids d'abeilles (1) au moins comportant un boîtier (2) et une structure en nids d'abeilles (3) avec une multiplicité de canaux (4), la structure en nids d'abeilles (3) étant formée avec au moins une couche métallique au moins partiellement structurée (5) qui crée des points de jonction (6) fixant la structure en nids d'abeilles (3) et une section transversale (8) de la structure en nids d'abeilles (3) ayant des zones radiales (9, 10, 11) avec des points de jonction (6) qui en direction d'un rayon (25) couvrent une pluralité de couches (5) métalliques, dans quel cas en outre dans au moins une zone (9, 10, 11) au moins 1 % et au maximum 20 % de points de contact intérieurs (7) de l'au moins une, l'au moins une couche métallique (5) au moins partiellement structurée forment dans la section transversale (8) un point de jonction (6) et dans au moins deux zones radiales (9, 10, 11) des canaux (4) ayant une section transversale de canal (12) différente (12) sont formés.

2. Corps en nids d'abeilles (1) selon la revendication 1, dans lequel se présente dans une zone radiale (9, 10, 11) une densité accrue de points de contact (7) par section transversale standardisée de la structure en nids d'abeilles (3) par rapport à au moins une autre zone radiale.

3. Corps en nids d'abeilles (1) selon la revendication 1 ou 2, dans lequel dans une zone radiale (9, 10, 11) une densité des points de jonction (6) vue le long de la couche métallique au moins partiellement structurée est élevée par rapport au moins à une autre zone radiale.

4. Corps en nids d'abeilles (1) selon l'une des revendications précédentes, dans le cas duquel dans une zone radiale (9, 10, 11) un parcours différent par rapport à une autre zone radiale (13) qui est au moins prévu au moins partiellement pour une couche métallique structurée(5).

5. Corps en nids d'abeilles (1) selon l'une des revendications précédentes, dans le cas duquel dans une zone radiale (9, 10, 11) la section de canal (12) est influencée par des projections (14) qui s'étendent dans les canaux (4).

6. Corps en nids d'abeilles (1) selon l'une des revendications précédentes, dans le cas duquel, dû à une largeur (15) ou une hauteur (16) modifiée d'une structure (17) dans une zone radiale (9, 10, 11), la section transversale de canal (12) de la couche métallique (5) au moins partiellement structurée est influencée.

7. Corps en nids d'abeilles (1) selon l'une des revendications précédentes, dans le cas duquel dans une zone radiale (9, 10, 11) les points de jonction (6) sont formés avec une étendue (18) dans une direction circonférentielle (19) de la structure en nids d'abeilles (3).

8. Corps en nids d'abeilles (1) selon l'une des revendications précédentes, dans le cas duquel la structure en nids d'abeilles (3) est réalisée dans au moins une zone radiale (9, 10, 11) avec un revêtement (20).

9. Corps en nids d'abeilles (1) selon l'une des revendications précédentes, dans le cas duquel la structure en nids d'abeilles (3) est formée avec une multiplicité de couches métalliques (5) au moins partiellement structurées (5), qui s'appliquent tous avec les deux extrémités (21) contre le boîtier (2) et qui ils y sont attachés de façon axialement limitée.

10. véhicule automobile (23) qui a une machine à combustion interne (36) et un système de traitement postérieur des gaz d'échappement (24) a au moins un corps en nids d'abeilles (1) selon l'une des revendications précédentes.
